# EUROPEAN PATENT APPLICATION

(11) **EP 2 308 612 A1**
(43) Date of publication of application: **13.04.2011**
(21) Application number: 10186889.1
(22) Date of filing: 07.10.2010
(51) Int. Cl.: B21J 15/02, F16B 19/10

(54) **Rivet connecting element, method for riveting the rivet connecting element, assembly of the rivet connecting element and a wall produced according to the method and a set of a rivet connecting element and as a gauge**

(30) Priority: 07.10.2009 BE 200900611
(71) Applicant: Arfilco, 2610 Wilrijk (BE)
(72) Inventor: Reul, Arthur, 2630 Aartselaar (BE)
(74) Representative: Luys, Marie-José A.H.

(57) **Abstract**

A rivet connecting element (1) with a flange-shaped head (6) and deforming chamber (7) extending in the circumferential direction of the rivet connecting element (1) about the axial direction (3), wherein a deformable part (8) of the deforming chamber (7) is deformable to form a flange-shaped counter-head in order to clamp the rivet connecting element (1) between the head (6) and the counter-head in a wall opening (10) of a wall (9), wherein one side of the head (6) designed to be adjacent to the wall (9) is provided with a relief (15) which is designed to engage in a complementary relief (16) provided for that purpose in the wall (9), and wherein the projection has an essentially rounded cross-section.

## Description

This invention relates to a rivet connecting element according to the preamble to the first claim.

This invention also relates to a method for riveting the rivet connecting element, an assembly of the rivet connecting element and a wall produced according to the method and a set of a rivet connecting element according to the present invention and a gauge.

Such a rivet connecting element is already known, for example from US2004/0247412A1. US2004/0247412A1 describes a metal blind riveting nut with an opening which extends along an axial direction of the rivet connecting element between two axial ends of the rivet connecting element. The rivet connecting element also has a flange-shaped head and deforming chamber extending in the circumferential direction of the rivet connecting element about the axial direction. A deformable part of the deforming chamber is deformable to form a flange-shaped counter-head in order to clamp the rivet connecting element between the head and the counter-head in the wall opening of a wall. However, the disadvantage of such blind riveting elements is that when a torque is exerted about the axial direction of the rivet connecting element, the rivet connecting element frequently rotates simultaneously in the wall opening, which is often undesirable, e.g. when the counter-head is formed by screws, as in US2004/0247412A1.

For this purpose one side of the head of the rivet connecting element according to US3030705 and US2763314 is designed to be adjacent to a wall provided with a relief which is designed to engage in a complementary relief provided for this purpose in the wall. The relief contains a projection which is designed to engage in a complementary recess provided for this purpose. However, the disadvantage of such rivet connecting elements is that the complementary recess in the wall should have a shape which is matched to the shape of the projection. This shape is often rectangular in order to be able to exert the highest possible torque. However, such shapes are difficult to produce in walls by the end user.

To solve this problem US20080193256, US3750525, EP0691480, W003086694 and EP0158304, for example, provide for rivet connecting elements wherein the head is provided with sharp projections which are designed to be pressed into the wall when riveting a rivet connecting element. However, such rivet connecting elements can be fitted in a limited number of walls, for the projections must be able to penetrate the wall. It follows from this, in practice, that this limits the choice of material for the rivet connecting element or that this limits the number of walls in which the rivet connecting element can be used.

It is therefore an object of the present invention to provide a rivet connecting element where the simultaneous rotation of a rivet connecting element in the wall opening of walls made from different materials is avoided when a torque is exerted about the axial direction of the rivet connecting element.

This is achieved by means of the technical features of the characteristic of the first claim.

For this purpose the projection has an essentially rounded cross-section.

Such a relief, when it engages in the complementary relief, therefore considerably limits the risk that the rivet connecting element may rotate simultaneously in the wall opening when a torque is exerted about the axial direction of the rivet connecting element.

Such rivet connecting elements also have the advantage that they do not rotate simultaneously when the rivet connecting element is removed, for example by drilling, which also simplifies removal of the rivet connecting element.

According to the present invention the relief comprises a projection which is designed to engage in a complementary recess for this purpose in the wall. Such a projection makes a rivet connecting element possible which counteracts the simultaneous rotation of the rivet connecting element in the wall opening.

The projection has an essentially rounded, preferably an essentially round cross-section, when taken along the surface of the head of the rivet connecting element. It has been found that in a projection with such a cross-section the pressure exerted on the projection under the influence of the exertion of a torque is better distributed about the axial direction. Moreover, the recess which enables such a projection to be received is also preferably essentially round, also causing the pressure exerted on the round recess to be better distributed. Furthermore, such a recess can easily be produced by drilling, for example. Because the recess can be produced in the wall by drilling, the same rivet connecting element can be fastened in a plurality of walls in which the projection no longer has to be pressed into the wall to form the recess in the wall. For example, a rivet connecting element can be riveted in this manner in a wall of a harder material with a limited risk that the rivet connecting element may rotate simultaneously in the wall opening when a torque is exerted about the axial direction of the rivet connecting element. It has even been found that a glass wall can be provided with the rivet connecting element according to the present invention with a limited risk that the rivet connecting element may rotate simultaneously in the wall opening of the glass wall when a torque is exerted about the axial direction of the rivet connecting element.

US3110213 describes a plastic plug with an essentially rounded projection to avoid the simultaneous rotation of the plug when fitting a screw. US3110213, however, does not describe a rivet connecting element.

In preferred embodiments of the present invention the edge of the projection is provided at a certain distance from the edge of the opening. An opening provided in such a way enables simultaneous rotation at a further increased torque to be counteracted since the distance from the axis of rotation is further increased during simultaneous rotation. It has also been found that the formation of the recess which corresponds to such a projection, particularly by means of drilling, and particularly when a gauge is used, is easier than if use is made, for example, of a projection that is positioned in such a manner that the recess corresponding to such a projection overlaps the opening, for example in the form of a projection with a semicircular cross-section that passes into the limiting wall of the opening.

In preferred embodiments of the rivet connecting element according to the present invention the rivet connecting element comprises screwing means in order to deform the deforming chamber by screwing to form the counter-head. Such screwing means makes simple deformation possible of the deforming chamber, whilst the interlocking relief and complementary relief prevent the rivet connecting element from rotating simultaneously in the wall opening during the deformation of the deforming chamber by screwing. This simplifies assembly and the rivet connecting element may, for example, be assembled with a considerably higher clamping force in the wall opening or less deformable materials may also be used for deforming chamber 7.

In further preferred embodiments of the rivet connecting element according to the present invention, the screwing means comprises a screw thread along a screwed part of the inner wall of the rivet connecting element which limits the opening, the deforming chamber being located between the head and the screwed section. In the case of such rivet connecting elements it has been found that a simple deformation of the deforming chamber becomes possible.

In preferred embodiments of the rivet connecting element according to the present invention, the rivet connecting element consists in preference essentially of metal. Such rivet connecting elements provide considerable stability whilst still allowing a deforming chamber to be provided.

The invention also relates to a method for riveting a rivet connecting element according to the present invention in a wall opening of a wall, a complementary relief being formed around the wall opening which is designed to engage in the relief provided for this purpose in the head of the rivet connecting element, whereupon the counter-head is formed. Such a method enables the material properties of the relief to be selected specifically to provide a sufficiently high resistance to a torque about the axial direction of the rivet connecting element.

In preferred embodiments of the method according to the present invention a recess is formed on the wall opening, complementary to the projection of the head, when forming the complementary relief around the wall opening, and is designed to receive the projection of the head. It has been found that such a recess can easily be formed.

In further preferred embodiments of the method according to the present invention the position of the recess is determined by means of a gauge, the gauge being fitted with a projecting part in the wall opening in order to position the gauge relative to the wall opening, and the gauge comprising an axial opening in order to position the gauge at the point where the recess is to be formed relative to the wall opening, whereupon the recess is formed in the wall along the axial opening. It has been found that such a gauge further simplifies the formation of the recess in the wall, particularly if the gauge is a drilling gauge and the recess is formed by means of drilling.

The invention also relates to an assembly of the rivet connecting element according to the present invention and a wall produced according to the method according to the present invention.

The invention also relates to a set of a gauge for implementing the method according to the present invention and a rivet connecting element according to the present invention.

The invention will be further explained by means of the description below and the attached figures of preferred embodiments of this invention.
Figure 1a shows a side view of a longitudinal section of a preferred embodiment of a rivet connecting element according to the present invention.
Figure 1b shows a bottom view of a detail of Figure 1 a.
Figure 1c shows a side view of a detail of Figure 1 c.
Figure 1d shows a top view of a preferred embodiment of a wall with a wall opening in which the rivet connecting element according to Figure 1 a can be installed.
Figure 2a shows a top view of a preferred embodiment of a drilling gauge according to the present invention.
Figure 2b shows a side view of a longitudinal section of the drilling gauge according to Figure 2a.
Figure 2c shows a detail of a Figure 2b.

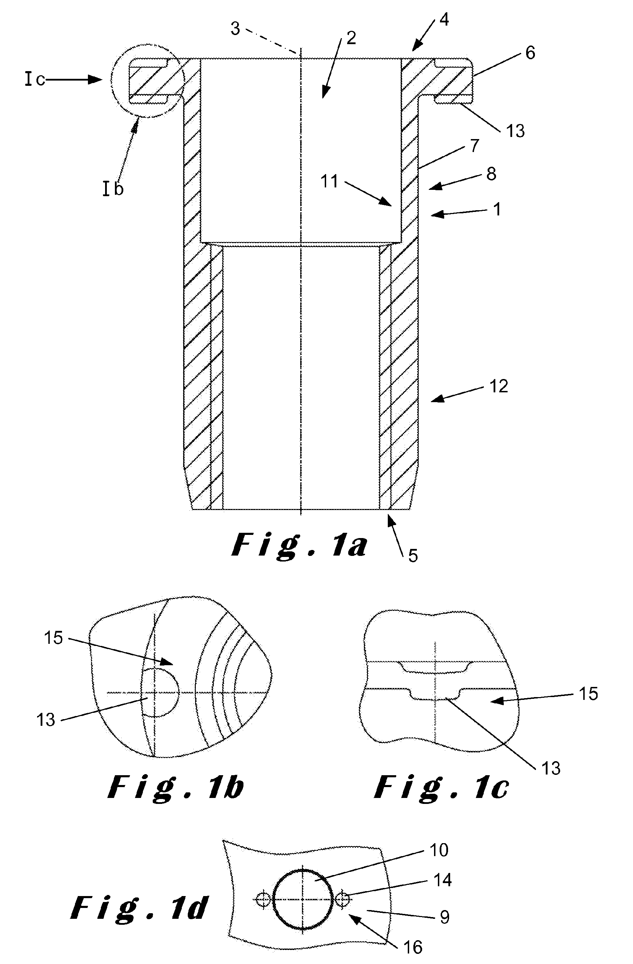

Figure 1 a shows a side view of a longitudinal section of a rivet connecting element 1 according to the present invention.

Rivet connecting element 1 has an opening 2 which extends at least partially through the rivet connecting element 1 along an axial direction 3 of the rivet connecting element 1 between two axial ends 4, 5. Although the opening 2 shown in Figure 1a passes fully through the rivet connecting element 1, this is not necessary for the invention and the opening 2 may also pass only partially through the rivet connecting element 1. In this case the opening 2 may be sealed, for example, close to or at a first axial end 4 or a second axial end 5.

The opening 2 is limited by inner wall 11 of the rivet connecting element 1. The inner wall 11 is not necessary for the invention and may assume any shape and dimension adapted to the application in which rivet connecting element 1 will ultimately be used.

The rivet connecting element 1 also has an outer wall 12. The distance between the inner wall 11 and the outer wall 12 is adapted, for example, to the diameter of opening 2, the shape of the rivet connecting element 1, etc.

Preferably the rivet connecting element 1 is made essentially of metal, and more preferably of aluminium, copper, brass, steel, more specifically stainless steel, as well as galvanised steel or nickel-coated steel. In selecting the material, consideration should preferably be given to the deformation of deformable part 8 of deforming chamber 7, and a material is selected which has sufficient deformability to provide the desired deformation of deformable part 8.

The rivet connecting element 1 also has a flange-shaped head 6 extending in the circumferential direction of the rivet connecting element 1 about axial direction 3. In Figure 1a the head 6 is provided at the first axial end 4. The shape and dimension of the head 6 are preferably adapted to the application in which rivet connecting element 1 will be used, but they are not essential for the invention.

The rivet connecting element 1 also has a deforming chamber 7. The deforming chamber 7 is provided with a deformable part 8 which is deformable to form a flange-shaped counter-head in order to clamp the rivet connecting element in a wall opening 10 of a wall 9, shown in Figure 1d, between the head 6 and the counter-head. The counter-head is not shown in the figures.

Although not shown, the rivet connecting element 1 preferably comprises screwing means for deforming deforming the chamber 7 by screwing to form the counter-head. In further preference the screwing means comprises a screw thread along a screwed part of the inner wall 11 of the rivet connecting element 1 which limits the opening 2, the deforming chamber 7 being located between the head 6 and the screwed part.

However, this is not necessary for the present invention and the deforming chamber 7 may also be deformed by flanging or other methods known to the person skilled in the art for forming a counter-head.

One side of the head 6 is designed to be adjacent to the wall 9 and is also provided with a relief 15 which is designed to engage in a complementary relief 16 provided for this purpose in wall 9.

The relief comprises a projection 13 which is designed to engage in a complementary recess 14 provided for this purpose in the wall 9. An example of such a projection 13 is shown in a side view, for example, in Figure 1a and in more detail in Figure 1b, in a bottom view, as well as in 1 c in a side view. As shown in Figures 1b and 1c, projection 13 preferably projects along axial direction 3.

The projection 13 shown has an essentially rounded, preferably round cross-section viewed along axial direction 3, which enables pressure exerted on it to be distributed better.

Although the projection 13 shown in Figure 1c is produced in the head 6 in the form of an axially extruded part of the head 6, this is not necessary for the invention and the projection 13 may also be a thickening on the side of the head 6 which is designed to come into contact with the wall 9 without a corresponding indent on the opposite side of the head 6 caused by axial extrusion. However, by providing the projection 13 by pushing away material in the head 6, a simple method is provided of forming such projections 13 in the head 6.

Although Figure 1 a only shows two projections 13 on the head 6, this is not necessary for the invention and the head 6 may also comprise more or fewer projections 13, such as one, three, four, five, six, seven, eight, nine, etc., for example. Although the installation of projections 13 in the head 6, shown in Figure 1a, is symmetrical about axial direction 3, this is not necessary either and projections 13 may also be arranged asymmetrically about the axial direction 3. A symmetrical arrangement of essentially the same projections about the axial direction 3 results, however, in a more regular distribution of forces which act on the projections, thus improving the connection made with the rivet connecting element 1. Projections 13 may differ from each other in shape and/or dimension according to the application in which they are to be used. However, projections 13 preferably all have essentially the same shape and dimension as shown in Figure 1a.

The complementary relief 14 is shown in Figure 1d. The complementary relief 16, shown in Figure 1d, comprises two recesses 14 formed in the wall 9. The projection 13 is designed to engage in the recess 14. The shape and dimension of the recess 14 are preferably adapted to the shape and dimension of the projection 13 so that, in further preference, the projection 13 can be received in the recess 14 so that it fits, and in greater preference so that it fits tightly. The number of recesses 14 is preferably adapted to the number of projections 13, so that there are at least as many, and in greater preference as many recesses 14 as there are projections 13. Recesses 14 are preferably rounded, and in greater preference essentially round, as shown in Figure 1d, which enables the recess 14 to be easily produced, by drilling for example. The advantage of drilling is that it can be carried out easily and even enables the recesses 14 to be formed easily in hard materials by making use of specific drills, for example tungsten carbide (tc) drills.

The recess 14 may fully penetrate the wall 9 or may, on the other hand, penetrate the wall 9 only partially. However, if the recess 14 is formed by drilling, the recess 14 preferably fully penetrates the wall 9 since this greatly facilitates drilling of the recess.

A wall opening 10, in which rivet connecting element 1 is riveted, is also provided in the wall 9 shown in Figure 1d. The wall opening 10 is preferably round, but this is not necessary for the invention and the wall opening 10 can also be triangular, square, pentagonal, hexagonal, heptagonal, etc., preferably regular. The advantage of a round wall opening 10 is that pressure in the wall 9 is distributed better around the wall opening 10, which prevents scratching of the wall 9, for example, and that a round wall opening 10 can be produced more easily, by drilling for example. Although the wall opening 10 is round, and therefore does not in principle prevent the simultaneous rotation of the rivet connecting element 1 when a torque is exerted about axial direction 3, this movement is still counteracted by the presence of a combination of the relief 15 and the complementary relief 16.

Although Figure 1 shows a head 6 with a projection 13 and a wall 9 with a recess 14, this is not necessary for the invention and the recess 14 may also be formed on the head 6 and the projection 13 on the wall 9. A combination may be possibly provided of projections 13 and recesses 14 on the head 6, which interact with complementary projections and recesses on the wall 9. However, it has been found that the formation of a recess 14 is easier than forming a projection 13, e.g. by drilling, and that consequently the wall 9 is preferably provided with a recess 14 and head 6 of a projection 13, since the head 6 is often made in a specialised machine and the wall 9 is often prepared on the assembly site for the assembly of rivet connecting element 1.

For the fitting of rivet connecting element 1 in a wall 9 the procedure is then as follows.

A wall opening 10 is provided in wall 9. This wall opening 10 may be drilled, for example, as already explained above.

Then, or before forming the wall opening 10, or even during the formation of the wall opening 10, complementary relief 16 is formed. It is therefore possible, for example, to provide the complementary relief 16 by punching, for example by punching out the wall opening 10 or milling. However, the complementary relief 16 is preferably drilled. In further preference the complementary relief 16 is drilled after the formation of the wall opening 10.

The rivet connection is not made and riveted in the wall opening 10 until after the wall opening 10 and the complementary relief 16 are formed. By forming the complementary relief 16 before riveting rivet the connecting element 1 and not during riveting of the rivet connecting element 1, for example during the formation of the counter-head, this enables the material of the head 6, more specifically the material of the relief 15, to be softer than the material of the wall 9, which provides a wider choice of material for the rivet connecting element 1.

As explained above, a recess 14 is preferably formed to wall opening 10, complementary to projection 13 of the head 6, when forming the complementary relief 16 around the wall opening 10, and is designed to receive the projection 13 of the head 6.

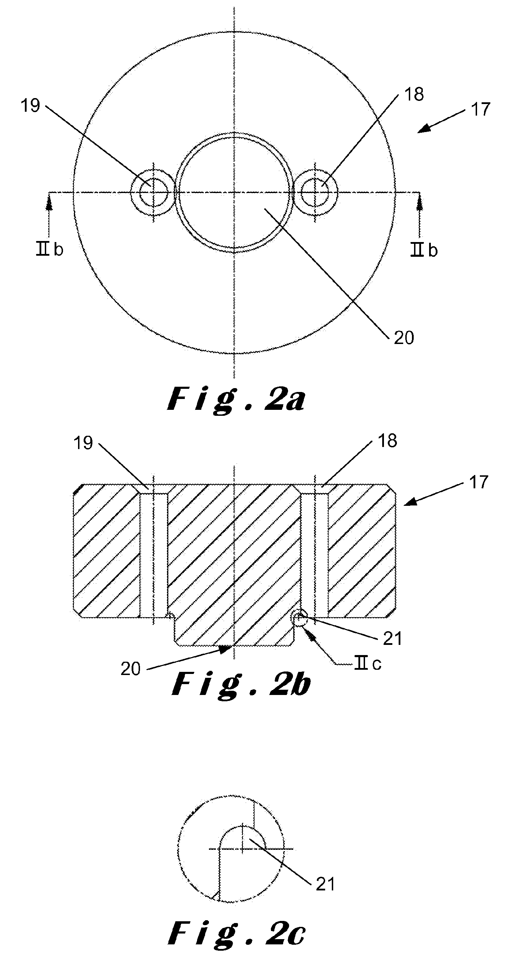

In further preference the position of the recess 14 is determined by means of a gauge 17. Here the gauge 17 is inserted in the wall opening 10 with a projecting part 20, which in further preference fits tightly in the wall opening 10, in order to position the gauge 17 relative to the wall opening 10. The gauge 17 also comprises an axial opening 18 at the point where the recess 14 must be formed relative to the wall opening 10, whereupon the recess 14 is formed in the wall 9 along the axial opening 18. If the recess 14 is formed by means of drilling, gauge 17 is a drilling gauge such as the drilling gauge shown in Figure 2b.

The gauge 17 preferably comprises an axial opening 18 for each recess 14 which is to be formed. The gauge 17, shown in Figure 2a and 2b, comprises, for example, two axial openings 18, 19, more specifically drilled openings. However, if a plurality of recesses 14 are to be formed in the wall 9, the gauge 17 may also comprise a plurality of axial openings 18, 19.

The gauge 17, shown in Figure 2b, also has an annular groove 21 around projecting part 20 on the side of the head 6, which is designed to come into contact with wall 9. In greater preference annular groove 21 is designed so that it abuts against projecting part 21. A detail of annular groove 21 is shown in Figure 2c. The annular groove enables irregularities caused by the formation of the wall opening 10, for example by drilling, to be absorbed on the wall opening 10 to allow the side of the gauge 17, designed to come into contact with the wall 9, to be connected as tightly as possible to the wall 9 so that better positioning of the gauge 17 on the wall 9 can be achieved.

## Claims

1. A rivet connecting element (1) with an opening (2) which extends along an axial direction (3) of the rivet connecting element (1) and at least partially through the rivet connecting element (1) between two axial ends (4, 5) of the rivet connecting element (1), and with a flange-shaped head (6) and deforming chamber (7) extending in the circumferential direction of the rivet connecting element (1) about the axial direction (3), wherein a deformable part (8) of the deforming chamber (7) is deformable to form a flange-shaped counter-head in order to clamp the rivet connecting element (1) between the head (6) and the counter-head in a wall opening (10) of a wall (9), wherein one side of the head (6), designed to be adjacent to the wall (9), is provided with a relief (15) which is designed to engage in a complementary relief (16) provided for this purpose in the wall (9), and wherein the relief (15) comprises a projection (13) which is designed to engage in a complementary recess (14) provided for this purpose in the wall (9), **characterised in that** the projection (13) has an essentially rounded cross-section.

2. The rivet connecting element (1) according to Claim 1, **characterised in that** the edge of the projection (13) is provided at a certain distance from the edge of the opening (2).

3. The rivet connecting element (1) according to Claim 1 or 2, **characterised in that** the rivet connecting element (1) comprises screwing means for deforming the deforming chamber (7) by screwing to form the counter-head.

4. The rivet connecting element (1) according to Claim 3, **characterised in that** the screwing means comprises a screw thread along a screwed part of the inner wall (11) of the rivet connecting element (1) which limits the opening (2), wherein the deforming chamber 7 is located between the head (6) and the screwed part.

5. The rivet connecting element (1) according to any one of the preceding claims, **characterised in that** the rivet connecting element (1) consists essentially of metal.

6. A method for riveting a rivet connecting element (1) according to any one of the preceding claims in a wall opening (10) of a wall (9), **characterised in that** around the wall opening (10) a complementary relief (16) is formed which is designed to engage in the relief (15) of the head (6) of the rivet connecting element (1) provided for this purpose, whereupon the counter-head is formed.

7. The method for riveting a rivet connecting element (1) according to claim 6 combined with claim 1, **characterised in that** when complementary relief (16) is formed around the wall opening (10), a recess (14) is formed on the wall opening (10) complementary to the projection (13) of the head (6) and is designed to receive the projection (13) of the head (6).

8. The method for riveting a rivet connecting element (1) according to Claim 7, **characterised in that** the recess is produced by drilling.

9. The method for riveting a rivet connecting element (1) according to Claim 7 or 8, **characterised in that** the position of the recess (14) is determined by means of a gauge (17), wherein the gauge (17) is inserted with a projecting part (20) in the wall opening (10) in order to position the gauge (17) relative to the wall opening (10) and **in that** the gauge comprises an axial opening (18) at the point where the recess (14) is to be formed relative to the wall opening (10) in the wall (9) along the axial opening (18).

10. The method for riveting a rivet connecting element (1) according to Claim 9, together with Claim 8, **characterised in that** the gauge (17) is a drilling gauge.

11. An assembly of the rivet connecting element (1) according to any one of Claims 1-5 and a wall produced according to any one of Claims 6-10.

12. A set of a rivet connecting element (1) according to any one of Claims 1-5 and a gauge for implementing the method according to Claim 9 or 10.
